# EUROPÄISCHE PATENTSCHRIFT

(11) **EP 1 240 249 B1**
(45) Veröffentlichungstag und Bekanntmachung des Hinweises auf die Patenterteilung: **12.10.2005**
(21) Anmeldenummer: 00972839.5
(22) Anmeldetag: 23.10.2000
(51) Int. Cl.: C08L 69/00, C08J 5/18

(54) **POLYCARBONAT-SUBSTRATE**
POLYCARBONATE SUBSTRATES
SUBSTRATS EN POLYCARBONATE

(30) Priorität: 03.11.1999 DE 19952850
(43) Veröffentlichungstag der Anmeldung: 18.09.2002
(73) Patentinhaber: Bayer MaterialScience AG, 51368 Leverkusen (DE); BAYER ANTWERPEN N.V., 2040 Antwerpen (BE)
(72) Erfinder: BÖDIGER, Michael, 41539 Dormagen (DE); KÜHLING, Steffen, B-9100 Sint Niklaas (BE); BRUYNSEELS, Franky, B-9170 Sint-Gillis-Waas (BE); VAN MEIRVENNE, Dirk, B-9100 Nieuwkerken-Waas (BE); DE CLEYN, Réne, B-2990 Wuustwezel (BE)
(86) Internationale Anmeldenummer: PCT/EP2000/010399
(87) Internationale Veröffentlichungsnummer: WO 2001/032778

(56) Entgegenhaltungen:
- EP-A- 0 380 002

## Beschreibung

Die Erfindung betrifft Formkörper hergestellt mit Polycarbonat besonders hoher Reinheit und extrem hoher Oberflächenbrillianz.

Für bestimmte Formkörper wie insbesondere Verscheibungen für Kraftfahrzeuge und Scheinwerfer, Verscheibungen anderer Art wie sogenannte Stegdoppelplatten oder Hohlkammerplatten oder Massivplatten wird hochreines Polycarbonat benötigt.

Polycarbonat wird nach dem sogenannten Phasengrenzflächenverfahren hergestellt, dabei werden Dihydroxydiarylalkane in Form ihrer Alkalisalze mit Phosgen in heterogener Phase in Gegenwart von anorganischen Basen wie Natronlauge und einem organischen Lösungsmittel, in dem das Produkt Polycarbonat gut löslich ist, umgesetzt. Während der Reaktion ist die wäßrige Phase in der organischen Phase verteilt und nach der Reaktion wird die organische, Polycarbonat enthaltende Phase mit einer wäßrigen Flüssigkeit gewaschen, wobei unter anderem Elektrolyte entfernt werden sollen, und die Waschflüssigkeit anschließend abgetrennt.

Zum Waschen der Polycarbonat enthaltenden Lösung schlägt die EP-A- 264 885 vor, die wäßrige Waschflüssigkeit mit der Polycarbonatlösung zu verrühren und die wäßrige Phase durch Zentrifugieren abzutrennen.

In der japanischen Anmeldung JP-A- 07 19 67 83 wird ein Verfahren zur Herstellung von Polycarbonat beschrieben, bei dem zur Erzielung eines günstigen Farbverhaltens der Gehalt von Eisen in der eingesetzten Natronlauge unterhalb von 2 ppm liegen soll.

In EP-A 380 002 wird ein Verfahren zur Herstellung von hochreichen Polycarbonat beschrieben. Bei diesem Verfahren wird die Hydrolyse von Polycarbonatharzen durch Spuren von Metallen und Lösungsmitteln, insbesondere chlorierte Lösungsmittel, hervorgerufen. Dies führt zu einem Nachteil in der Zuverlässigkeit von optischen Datenspeichern, daher soll ein Abbau des Polycarbonats verhindert werden. Um dieses Problem zu lösen, wird der Metallgehalt des optischen Datenspeichers auf <1 ppm reduziert. Dazu wird das Polycarbonatharz gewaschen und gefiltert, um diese Verunreinigung zu entfernen. Eine Heißfiltration um den Anteil an Metall besonders niedrig zu halten, wie sie für die erfindungsgemäßen Formkörper offenbart ist, wird in EP-A 380 002 nicht beschrieben.

Die Aufgabe der vorliegenden Erfindung ist die Bereitstellung eines alternativen und verbesserten Verfahrens zur Herstellung von reinem Polycarbonat-Substraten sowie die Bereitstellung von Polycarbonat-Formkörpern mit besonders hoher Reinheit und hoher Oberflächenbrillianz.

Überraschenderweise wurde nun gefunden, daß Polycarbonat-Formkörper mit besonders hoher Reinheit und hoher Oberflächenbrillianz erhalten werden, wenn das Polycarbonat nach einem opeziellem Verfahren hergestellt wird.

Gegenstand der Anmeldung sind daher Formkörper hergestellt mit Polycarbonat welches weniger als 250 Störstellen pro m² gemessen an einer Extrusionsfolie besitzt und eine Trübung von weniger als 0,5% hat, wobei das Polycarbonat nach dem Phasengrenzflächenverfahren hergestellt ist, wobei Dihydroxydiarylalkane in Form ihrer Alkalisalze mit Phosgen in heterogener Phase in Gegenwart von Natronlauge und einem organischen Lösungsmittel umgesetzt wird, dadurch geken-zeichnet, daß
a) die Einsatrstoffe arm an Fe-, Cr-, Ni-, Zn-, Ca-, Mg-, Al-Metallen oder ihren Homologen sind
d) die bei der Reaktion entstehende wäßrige Phase abgetrennt und die abgetrennte organische Polycarbonat-Phase mit einer wäßrigen Flüssigkeit gewaschen und
e) die gewaschene und von der Waschflüssigkeit abgetrennte organische Polycarbonat-Phase, gegebenenfalls nach einer Filtration, erwärmt und mindestens einmal heiß filtriert wird;
b) das organische Lösungsmittel abgetrennt und
c) das erhaltene Polycarbonat aufgearbeitet wird.

Im Sinne der Erfindung bedeutet arm an den genannten Metallen oder ihren chemischen Homologen, daß vorzugsweise nicht mehr als 2 ppm, bevorzugt nicht mehr als 1 ppm und besonders bevorzugt nicht mehr als 0,5 ppm und ganz besonders bevorzugt nicht mehr als 0,2 ppm Gesamt-Metall, insbesondere der oben auf-gezählten Metalle und deren Homologen in den Einsatzstoffen enthalten ist Von diesen Grenzwerten sind die Alkalimetalle ausgenommen.

Bevorzugt sollte der Einsatzstoff Natronlauge arm an den genannten Metallen sein. Insbesondere sollte bezogen auf einen 100 Gew.%igen NaOH-Gehalt die Natronlauge jeweils nicht mehr als 1 ppm, vorzugsweise nicht mehr als 0,5 ppm, bevorzugt nicht mehr als 0,3 ppm an Erdalkalimetall oder dessen Homologen enthalten. Insbesondere sollte der Einsatzstoff Natronlauge bezogen auf einen 100 Gew.%igen NaOH-Gehalt nicht mehr als 1 ppm, vorzugsweise nicht mehr als 0,5 ppm, bevorzugt nicht mehr als 0,1 ppm Eisen enthalten.

Die Natronlauge wird im erfindungsgemäßen Verfahren vorzugsweise als 20-55 Gcw.-%ige, besonders bevorzugt 30-50 Gew.-%ige Lösung eingesetzt.

Natronlauge mit den oben angegebenen Grenzwerten ist nach dem literaturbekannten Membranverfahren erhältlich.

In einer bevorzugten Ausführungsform sind neben der Natronlauge auch die Einsatzstoffe Bisphenol, insbesondere Bisphenol und Wasser, ganz besonders bevorzugt das Bisphenol, Wasser und das organische Lösungsmittel Metallarm, insbesondere arm an Fe, Cr, Ni, Zn, Ca, Mg, Al oder ihren chemischen Homologen.

Dabei sind auch Ausführungsformen eingeschlossen, bei denen aus Natronlauge und Bisphenol(en) vorher Natriumbisphenolat(lösung) hergestellt wurde.

Diese metallarmen Einsatzstoffe werden dadurch erhalten, daß das Lösungsmittel in einer bevorzugten Variante destilliert, das Bisphenol kristallisiert, bevorzugt mehrfach kristallisiert oder destilliert und Wasser in VE-Qualität eingesetzt wird.

Das VE-Wasser ist vorzugsweise entsalzt, entgast und/oder entkieselt. Als Qualitätskriterium dient z.B. die elektrische Leitfähigkeit (Summenparameter für ionogene Stoffe der noch in Spuren im Wasser vorhandenen Salze) wobei im erfindungsgemäßen Verfahren das VE-Wasser durch eine elektrische Leitfähigkeit von 0,2 µS/cm (DIN 38404 C 8) und einer SiO₂-Konzentration von 0,02 mg/kg (VGB 3.3.1.1) oder jeweils weniger gekennzeichnet ist.

Der Gehalt an gelöstem Sauerstoff im VE-Wasser beträgt vorzugsweise weniger als 1 ppm, bevorzugt weniger als 100 ppb. Dieser Sauerstoffgehalt wird bevorzugt für alle Ausgangsstoffe und Verfahrensschritte eingestellt.

In einer weiter bevorzugten Ausführungsform werden aus der Gruppe der Einsatzstoffe mindestens die Natronlauge, bevorzugt zusätzlich auch das Bisphenol, besonders bevorzugt die Natronlauge, das Bisphenol und das Wasser, ganz besonders bevorzugt die Natronlauge, das Bisphenol, das Wasser und das organische Lösungsmittel mindestens einmal, bevorzugt zweimal, besonders bevorzugt stufenweise dreimal vor dem Beginn der Reaktion filtriert.

In einer bevorzugten Ausführungsform wird in Verfahrensschritt d) direkt nach der Reaktion die Reaktionsmischung filtriert und/oder die erhaltenen und abgetrennte organische Polycarbonat-Phase filtriert und/oder die in Verfahrensschritt e) abgetrennte organische Polycarbonat-Phase filtriert.

Vorzugsweise werden mindestens zwei dieser Filtrationen, insbesondere alle drei Filtrationen durchgeführt.

In einer bevorzugten Variante wird, insbesondere bei der Heißfiltration, mindestens einmal, bevorzugt zweimal, besonders bevorzugt mindestens dreimal, insbesondere stufenweise filtriert. Bei der stufenweise Filtration beginnt man mit gröberen Filtern, um dann zu feineren Filtern zu wechseln. Bevorzugt ist, daß man die Filtration der zweiphasigen Medien in Verfahrensschritt d) mit gröberen Filtern durchführt.

Im Verfahrensschritt e) werden für die Heißfiltration Filter mit kleiner Porengröße eingesetzt. Hierfür ist wichtig, daß die Polycarbonat-Phase als möglichst homogene Lösung vorliegt. Dies wird durch Erwärmen der, im allgemeinen noch Reste von wäßriger Waschflüssigkeit enthaltenden, organischen Polycarbonat-Phase erreicht. Dabei wird die Waschflüssigkeit gelöst und eine klare Lösung entsteht. Die zuvor gelösten Verunreinigungen, insbesondere die gelösten Alkalisalze, fallen aus und können abfiltriert werden.

Zur Erreichung einer homogenen Lösung kann neben dem oben beschrieben Verfahren auch das bekannte Ausfrier-Verfahren eingesetzt werden.

Zur Durchführung der erfindungsgemäßen Filtration werden Membranfilter und Sintermetallfilter oder auch Beutelfilter als Filter eingesetzt. Die Porengröße der Filter betragen in der Regel 0,01 bis 5 µm, vorzugsweise 0,02 bis 1,5 µm, bevorzugt 0,05 µm bis 1,0 µm. Solche Filter sind im Handel beispielsweise von den Firmen Pall GmbH, D-63363 Dreieich, und Krebsböge GmbH, D-42477 Radevormwald, (Typ SIKA-R CU1AS) erhältlich.

Durch die Kombination der erfindungsgemäßen Verfahren werden deutlich bessere Filterstandzeiten erhalten.

Die Durchführung der anderen Verfahrensschritte ist im allgemeinen bekannt. So wird während der Reaktion die wäßrige Phase in der organischen Phase emulgiert. Dabei entstehen Tröpfchen unterschiedlicher Größe. Nach der Reaktion wird die organische, das Polycarbonat enthaltende Phase, üblicherweise mehrmals mit einer wäßrigen Flüssigkeit gewaschen und nach jedem Waschvorgang von der wäßrigen Phase soweit wie möglich getrennt: Die Wäsche erfolgt bevorzugt mit feinstfiltrietem, metallarmen Wasser. Die Polymerlösung ist nach der Wäsche und Abtrennung der Waschflüssigkeit üblicherweise trüb. Als Waschflüssigkeit werden wäßrige Flüssigkeit zur Abtrennung des Katalysators, eine verdünnte Mineralsäure wie HCl oder H₃PO₄ und zur weiteren Reinigung vollentsalztes Wasser eingesetzt. Die Konzentration von HCl oder H₃PO₄ in der Waschflüssigkeit kann beispielsweise 0,5 bis 1,0 Gew.% betragen. Die organische Phase wird beispielhaft und vorzugs-weise fünfmal gewaschen.

Als Phasentrennvorrichtungen zur Abtrennung der Waschflüssigkeit von der organischen Phase können grundsätzlich bekannte Trenngefäße, Phasenseparatoren, Zentrifugen oder Coalescer oder auch Kombinationen dieser Einrichtungen verwendet werden.

Zum Erhalt des hochreinen Polycarbonats wird das Lösungsmittel abgedampft. Das Abdampfen kann in mehreren Verdampferstufen erfolgen. Gemäß einer weiteren bevorzugten Ausführungsform dieser Erfindung kann das Lösungsmittel oder ein Teil des Lösungsmittels durch Sprühtrocknung entfernt werden. Das hochreine Polycarbonat fällt dann als Pulver an. Gleiches gilt für die Gewinnung des hochreinen Polycarbonats durch Fällung aus der organischen Lösung und anschließender Resttrocknung. Beispielsweise ist die Extrusion ein geeignetes Mittel zur Verdampfung von Restlösungsmittel. Eine andere Technologie stellt die Strangverdampfertechnologie dar.

Als Einsatzstoffe bevorzugt einzusetzende Verbindungen sind Bisphenole der allgemeinen Formel HO-Z-OH, worin Z ein organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)diisopropylbenzole gehören.

Besonders bevorzugte Bisphenole, die zu den vorgenannten Verbindungsgruppen gehören, sind 2,2-Bis-(4-hydroxyphenyl)-propan (BPA/Bisphenol-A), Tetraalkylbisphenol-A, 4,4-(meta-Phenylendiisopropyl) diphenol (Bisphenol M), 1,1-Bis-(4-hydroxyphenyl)-3,3,5-trimethylcyclohexanon sowie gegebenenfalls deren Gemische. Besonders bevorzugte Copolycarbonate sind solche auf der Basis der Monomere Bisphenol-A und 1,1-Bis-(4-hydroxyphenyl)-3,3,5-trimethylcyclohexan. Die erfindungsgemäß einzusetzenden Bisphenolverbindungen weiden mit Kohlensäureverbindungen, insbesondere Phosgen, umgesetzt.

Die Polyestercarbonate werden durch Umsetzung der bereits genannten Bisphenole, mindestens einer aromatischen Dicarbonsäure und gegebenenfalls Kohlensäure erhalten. Geeignete aromatische Dicarbonsäuren sind beispielsweise Orthophtalsäure, Terephthalsäure, Isophthalsäure, 3,3'- oder 4,4'-Diphenyldicarbonsäure und Benzophenondicarbonsäuren.

In dem Verfahren verwendete inerte organische Lösungsmittel sind beispielsweise Dichlormethan, die verschiedenen Dichlorethane und Chlorpropanverbindungen, Chlorbenzol und Chlortoluol, vorzugsweise werden Dichlormethan und Gemische aus Dichlormethan und Chlorbenzol eingesetzt.

Die Reaktion kann durch Katalysatoren, wie tertiäre Amine, N-Alkylpiperidine oder Oniumsalze beschleunigt werden. Bevorzugt werden Tributylamin, Triethylamin und N-Ethylpiperidin verwendet. Als Kettenabbruchmittel und Molmassenregler können ein monofunktionelles Phenol, wie Phenol, Cumylphenol, p.-tert.-Burylphenol oder 4-(1,1,3,3-Tetramethylbutyl)phenol verwendet werden. Als Verzweiger kann beispielsweise Isatinbiscresol eingesetzt werden.

Zur-Herstellung der hochreinen Polycarbonate werden die Bisphenole in wäßriger alkalischer Phase, vorzugsweise Natronlauge, gelöst. Die gegebenenfalls zur Herstellung von Copolycarbonaten erforderlichen Kettenabbrecher werden in Mengen von 1,0 bis 20,0 Mol % je Mol Bisphenol, in der wäßrigen alkalischen Phase gelöst oder zu dieser in einer inerten organischen Phase in Substanz zugegeben. Anschließend wird Phosgen in den die übrigen Reaktionsbestandteile enthaltenden Mischer eingeleitet und die Polymerisation durchgeführt.

Gegebenenfalls einzusetzende Kettenabbrecher sind sowohl Monophenole als auch Monocarbonsäuren. Geeignete Monophenole sind Phenol selbst, Alkylphenole wie Kresole, p-tert.-Butylphenol, p-Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol sowie deren Mischungen.

Geeignete Monocarbonsäuren sind Benzoesäure, Alkylbenzoesäuren und Halogenbenzoesäuren.

Bevorzugte Kettenabbrecher sind die Phenole der Formel (I) 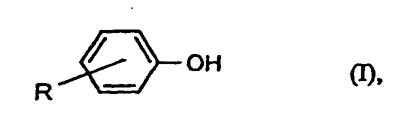 worin
- R: Wasserstoff, tert.-Butyl oder ein verzweigter oder unverzweigter C₈- und/oder C₉-Alkylrest ist.

Bevorzugter Kettenabbrecher ist Phenol und p-tert.-Butylphenol.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Gegebenenfalls kann der Reaktion noch Verzweiger zugesetzt werden. Bevorzugte Verzweiger sind die in der Polycarbonatchemie bekannten tri- oder mehr als trifunktionellen Verbindungen, insbesondere solche mit drei oder mehr als drei phenolischen OH-Gruppen.

Verzweiger sind beispielhaft und vorzugsweise auch Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methylbenzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden.

Ein Teil, bis zu 80 Mol%, vorzugsweise von 20 bis 50 Mol% der Carbonat-Gruppen in den Polycarbonaten können durch aromatische Dicarbonsäureester-Gruppen ersetzt sein.

Die erfindungsgemäßen Polycarbonate sind sowohl Homopolycarbonate als auch Copolycarbonate und deren Gemische. Die erfindungsgemäßen Polycarbonate können aromatische Polyestercarbonate sein oder Polycarbonate, die im Gemisch mit aromatischen Polyestercarbonaten vorliegen. Der Begriff Polycarbonat steht stellvertretend für die nach den erfindungsgemäßen Verfahren erhältlichen Polycarbonat-Substrate.

Die erfindungsgemäßen Polycarbonate haben mittlere Molekulargewichte M_{w} (ermittelt durch Messung der relativen Viskosität bei 25°C in Dichlormethan und einer Konzentration von 0,5 g Polycarbonat/100 ml Dichlormethan) von 12.000 bis 400.000, vorzugsweise von 23.000 bis 80.000 und insbesondere von 24.000 bis 40.000.

ErEndungsgemäße Formkörper die aus den erfindungsgemäßen hochreinen Polycarbonat hergestellt werden können sind insbesondere Verscheibungen für Kraftfahrzeuge und Scheinwerfer, Verscheibungen anderer Art wie für Gewächshäuser, sogenannte Stegdoppelplatten oder Hohlkammerplatten oder Massivplatten. Hergestellt werden diese Formkörper nach bekannten Methoden wie z.B. durch Spritzgußverfahren, Extrusionsverfahren und Extrusions-Blasformverfahren unter Einsatz der erfindungsgemäßen Polycarbonate.

Die Formteile aus den erfindungsgemäß produzierten Polycarbonaten, weisen eine besonders niedrige Anzahl von weniger als 250, insbesondere weniger als 150 Störstellen pro m² gemessen an einer 200 µm Extrusionsfolie auf.

Der Vorteil der erfindungsgemäßen Formkörper, insbesondere der Massivplatten und Doppelstegplatten ist ihre extrem niedrige Anzahl an optisch erkennbaren Oberflächenstörungen und ihre hervorragende Brillanz.

Ein weiterer Vorteil der erfindungsgemäßen Formkörper, insbesondere der Scheiben und Streulichtscbeiben ist ihre niedrige Trübung von weniger als 0,5 %, insbesondere weniger als 0,4 % verbunden mit Langzeitstandfestigkeit.

Die nachfolgende Beispiele dienen zur Erläuterung der Erfindung. Die Erfindung ist nicht auf die Beispiele beschränkt.

### Beispiele

### Beispiel 1

Zur Herstellung der Polycarbonate wird BPA (BPA wird als Schmelze kontinuierlich mit Natronlauge zusammengebracht) in Natronlauge unter Sauerstoffausschluß gemischt. Die eingesetzte Natronlauge weist unterschiedliche Konzentrationen und Reinheiten (s. Tab.1) auf, wobei zur Lösung der Bisphenole die Ursprungs-Natronlauge noch weiter auf eine 6,5%ige Natronlauge mit filtriertem VE-Wasser verdünnt wird. Diese Natriumbisphenolatlösung wird nun filtriert (0,6 µa Filter) und in die Polycarbonatreaktion eingesetzt. Nach der Reaktion wird die Reaktionslösung über einen 1,0 µnom Beutelfilter filtriert und der Wäsche zugeführt. Hier wird mit 0,6 %igen Salzsäure gewaschen und anschließend mit filtriertem VE-Wasser noch 5 mal nachgewaschen. Die organische Lösungwird von den wässrigen abgetrennt und nach dem Erwärmen der organichen Lösung auf 55°C zuerst mit 0,6 µa Filter und anschließend über ein 0,2 µa Filter filtriert. Nach der Isolierung das Poly-2,2-bis-(4-hydroxylphenyl)-propancarbonat erhalten. Das Poylcarbonat weist ein mittleres Molekulargewicht M_{w} von 31.000 auf.

**Tabelle 1**

| **Qualität Natronlange** | | | |
|---|---|---|---|
| | 1 | 2 | 3 |
| % NaOH | 50 | 50 | 32 |
| Fe (ppm) | 0,7 | 0,46 | 0,02 |
| Ca (ppm) | 2,0 | 0,4 | < 0,1 |
| Mg (ppm) | 0,5 | 0,2 | < 0,1 |
| Ni (ppm) | 0,2 | 0,2 | < 0,01 |
| Cr (ppm) | 0,4 | 0,25 | < 0,01 |
| Zn (ppm) | 0,1 | 0,05 | 0,06 |
| Summe (ppm) | 3,9 | 1,56 | < 0,3 |

| Conc. in 100% NAOH | 1 | 2 | 3 |
|---|---|---|---|
| Fe (ppm) | 1,4 | 0,9 | 0,06 |
| Ca (ppm) | 4,0 | 0,8 | < 0,3 |
| Mg(ppm) | 1,0 | 0,4 | < 0,3 |
| Ni (ppm) | 0,4 | 0,4 | < 0,03 |
| Cr (ppm) | 0,8 | 0,5 | < 0,03 |
| Zn (ppm) | 0,2 | 0,1 | 0,19 |
| Summe (ppm) | 7,8 | 3,1 | < 0,9 |

Die Filterstandzeiten für verschiedene Filterstandorte betragen für die einzelnen Fälle:

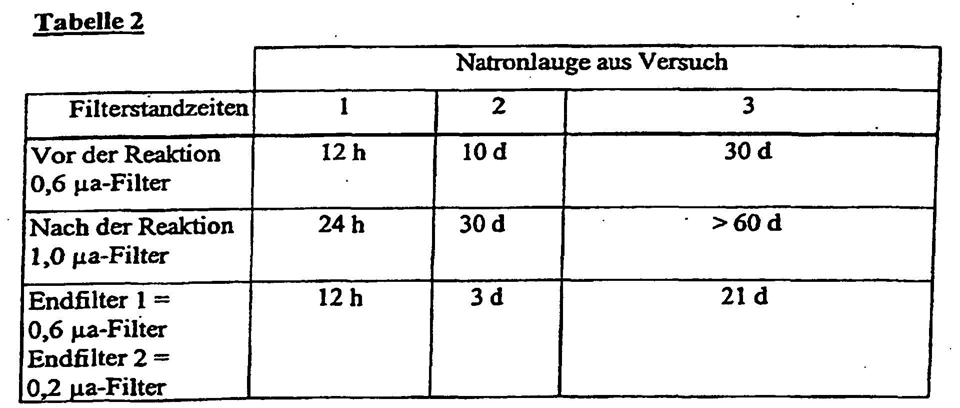

Aus den Polycarbonaten hergestellt mit Natronlauge aus den Versuchen 1 bis 3 werden Folien extrudiert und diese, mittels der unten beschrieben bekannten Methode, einem Folien-Laser Scan Test unterzogen.

Die Extrusionsfolie ist 200 µm dick und 60 mm breit. Ein He-Ne-Laser ("Spot-diameter" von 0.1 mm) tastet die Folie, mit einer Scanfrequenz von 5000 Hz in der Breiterichtung und eine Transportgeschwindigkeit von 5 m/s in der Längsrichtung, ab. Dabei werden alle Störstellen, die eine Streuung des durchgehenden Laserstrahls (ab 0.10 mm Durchmesser) bewirken, durch einen Photomultiplier detektiert und softwaremäßig gezählt. Die Anzahl optische Störstellen pro kg Polycarbonat bzw. pro m² Folie, ist ein Maß für die Oberflächenqualität dieser Folie bzw. Reinheit des PC.

| **Auswertung Extrusionsfolie mit Laserscanner** | | | |
|---|---|---|---|
| | PC hergestellt mit Natronlauge aus Versuch | | |
| # pro m² Oberfläche | 1 | 2 | 3 |
| 0,10 - 0,30 mm | 148 | 93 | 35 |
| > 0,30 mm | 232 | 132 | 41 |
| Summe | 380 | 225 | 76 |

Aus den Polycarbonaten unterschiedlicher Qualitätsgüte werden Farbmusterplättchen hergestellt. Die Farbmusterplättchen weisen, nach ASTM D1003, eine unter-schiedliche Trübung auf. Die Farbmusterplättchen (4 mm Dicke), aus den mit Natronlauge aus Versuch 3 hergestellten Polycarbonaten, weisen eine besonders niedrige Trübung von 0,38 % auf, was in der Anwendung als Verscheibung/-Streulichtscheibe zu geringerer diffuser Lichtstreuung führt.

## Patentansprüche

1. Formkörper hergestellt mit Polycarbonat welches weniger als 250 Störstellen pro m² gemessen an einer 200 µm Extrusionsfolie besitzt und eine Trübung von weniger als 0,5 % hat, wobei das Polycarbonat nach dem Phasengrenzflächenverfahren hergestellt ist, wobei Dihydroxydiarylalkane in Form ihrer Alkalisalze mit Phosgen in heterogener Phase in Gegenwart von Natronlauge und einem organischen Lösungsmittel umgesetzt wird, **dadurch gekennzeichnet, daß**
a) die Einsatzstoffe arm an Fe-, Cr-, Ni-, Zn-, Ca-, Mg-, Al-Metallen oder ihren Homologen sind,
d) die bei der Reaktion entstehende wäßrige Phase abgetrennt und die abgetrennte organische Polycarbonat-Phase mit einer wäßrigen Flüssigkeit gewaschen und
e) die gewaschene und von der Waschflüssigkeit abgetrennte organische Polycarbonat-Phase, gegebenenfalls nach einer Filtration, erwärmt und mindestens einmal heiß filtriert wird;
b) das organische Lösungsmittel abgetrennt und
c) das erhaltene Polycarbonat aufgearbeitet wird.

2. Folie hergestellt mit Polycarbonat welches weniger als 250 Störstellen pro m² gemessen an einer 200 µm Extrusionsfolie besitzt und eine Trübung von weniger als 0,5 % hat, wobei das Polycarbonat nach dem Phasengrenzflächenverfahren hergestellt ist, wobei Dihydroxydiarylalkane in Form ihrer Alkalisalze mit Phosgen in heterogener Phase in Gegenwart von Natronlauge und einem organischen Lösungsmittel umgesetzt wird, **dadurch gekennzeichnet, daß**
a) die Einsatzstoffe arm an Fe-, Cr-, Ni-, Zn-, Ca-, Mg-, Al-Metallen oder ihren Homologen sind,
d) die bei der Reaktion entstehende wäßrige Phase abgetrennt und die abgetrennte organische Polycarbonat-Phase mit einer wäßrigen Flüssigkeit gewaschen und
e) die gewaschene und von der Waschflüssigkeit abgetrennte organische Polycarbonat-Phase, gegebenenfalls nach einer Filtration, erwärmt und mindestens einmal heiß filtriert wird;
b) das organische Lösungsmittel abgetrennt und
c) das erhaltene Polycarbonat aufgearbeitet wird.

3. Scheiben hergestellt mit Polycarbonat welches weniger als 250 Störstellen pro m² gemessen an einer 200 µm Extrusionsfolie besitzt und eine Trübung von weniger als 0,5 % hat, wobei das Polycarbonat nach dem Phasengrenzflächenverfahren hergestellt ist, wobei Dihydroxydiarylalkane in Form ihrer Alkalisalze mit Phosgen in heterogener Phase in Gegenwart von Natronlauge und einem organischen Lösungsmittel umgesetzt wird, **dadurch gekennzeichnet, daß**
a) die Einsatzstoffe arm an Fe-, Cr-, Ni-, Zn-, Ca-, Mg-, Al-Metallen oder ihren Homologen sind,
d) die bei der Reaktion entstehende wäßrige Phase abgetrennt und die abgetrennte organische Polycarbonat-Phase mit einer wäßrigen Flüssigkeit gewaschen und
e) die gewaschene und von der Waschflüssigkeit abgetrennte organische Polycarbonat-Phase, gegebenenfalls nach einer Filtration, erwärmt und mindestens einmal heiß filtriert wird;
b) das organische Lösungsmittel abgetrennt und
c) das erhaltene Polycarbonat aufgearbeitet wird.

4. Platten hergestellt mit Polycarbonat welches weniger als 250 Störstellen pro m² gemessen an einer 200 µm Extrusionsfolie besitzt und eine Trübung von weniger als 0,5 % hat, wobei das Polycarbonat nach dem Phasengrenzflächenverfahren hergestellt ist, wobei Dihydroxydiarylalkane in Form ihrer Alkalisalze mit Phosgen in heterogener Phase in Gegenwart von Natronlauge und einem organischen Lösungsmittel umgesetzt wird, **dadurch gekennzeichnet, daß**
a) die Einsatzstoffe arm an Fe-, Cr-, Ni-, Zn-, Ca-, Mg-, Al-Metallen oder ihren Homologen sind,
d) die bei der Reaktion entstehende wäßrige Phase abgetrennt und die abgetrennte organische Polycarbonat-Phase mit einer wäßrigen Flüssigkeit gewaschen und
e) die gewaschene und von der Waschflüssigkeit abgetrennte organische Polycarbonat-Phase, gegebenenfalls nach einer Filtration, erwärmt und mindestens einmal heiß filtriert wird;
b) das organische Lösungsmittel abgetrennt und
c) das erhaltene Polycarbonat aufgearbeitet wird.

## Claims

1. Moulded item prepared from polycarbonate which has fewer than 250 defects per m², measured in a 200 µm extruded film and has a cloudiness of less than 0.5 %, wherein the polycarbonate is prepared by the phase boundary process, wherein dihydroxydiarylalkanes in the form of their alkali metal salts are reacted with phosgene in heterogeneous phase in the presence of sodium hydroxide solution and an organic solvent, **characterised in that**
a) the feedstocks are low in the metals Fe, Cr, Ni, Zn, Ca, Mg, Al or their homologues
b) the aqueous phase being produced during reaction is separated and the separated organic polycarbonate phase is washed with an aqueous liquid and
c) the washed, and separated from the wash liquid, organic polycarbonate phase, optionally after filtration, is heated and filtered hot at least once;
d) the organic solvent is separated off and
e) the polycarbonate obtained is worked up.

2. Film prepared from polycarbonate which has fewer than 250 defects per m², measured in a 200 µm extruded film and has a cloudiness of less than 0.5 %, wherein the polycarbonate is prepared by the phase boundary process, wherein dihydroxydiarylalkanes in the form of their alkali metal salts are reacted with phosgene in heterogeneous phase in the presence of sodium hydroxide solution and an organic solvent, **characterised in that**
a) the feedstocks are low in the metals Fe, Cr, Ni, Zn, Ca, Mg, Al or their homologues
b) the aqueous phase being produced during reaction is separated and the separated organic polycarbonate phase is washed with an aqueous liquid and
c) the washed, and separated from the wash liquid, organic polycarbonate phase, optionally after filtration, is heated and filtered hot at least once;
d) the organic solvent is separated off and
e) the polycarbonate obtained is worked up.

3. Discs prepared from polycarbonate which has fewer than 250 defects per m², measured in a 200 µm extruded film and has a cloudiness of less than 0.5 %, wherein the polycarbonate is prepared by the phase boundary process, wherein dihydroxydiarylalkanes in the form of their alkali metal salts are reacted with phosgene in heterogeneous phase in the presence of sodium hydroxide solution and an organic solvent, **characterised in that**
a) the feedstocks are low in the metals Fe, Cr, Ni, Zn, Ca, Mg, Al or their homologues
b) the aqueous phase being produced during reaction is separated and the separated organic polycarbonate phase is washed with an aqueous liquid and
c) the washed, and separated from the wash liquid, organic polycarbonate phase, optionally after filtration, is heated and filtered hot at least once;
d) the organic solvent is separated off and
e) the polycarbonate obtained is worked up.

4. Sheets prepared from polycarbonate which has fewer than 250 defects per m², measured in a 200 µm extruded film and has a cloudiness of less than 0.5 %, wherein the polycarbonate is prepared by the phase boundary process, wherein dihydroxydiarylalkanes in the form of their alkali metal salts are reacted with phosgene in heterogeneous phase in the presence of sodium hydroxide solution and an organic solvent, **characterised in that**
a) the feedstocks are low in the metals Fe, Cr, Ni, Zn, Ca, Mg, Al or their homologues
b) the aqueous phase being produced during reaction is separated and the separated organic polycarbonate phase is washed with an aqueous liquid and
c) the washed, and separated from the wash liquid, organic polycarbonate phase, optionally after filtration, is heated and filtered hot at least once;
d) the organic solvent is separated off and
e) the polycarbonate obtained is worked up.

## Revendications

1. Corps moulé préparé avec un polycarbonate qui possède moins de 250 imperfections par m² mesurées sur une feuille d'extrusion de 200 µm et un trouble de moins de 0,5 %, le polycarbonate étant préparé selon le procédé interfacial, des dihydroxydiarylalcanes étant mis en réaction sous la forme de leurs sels alcalins avec du phosgène dans une phase hétérogène en présence de soude caustique et d'un solvant organique,
**caractérisé en ce**
a) que les substances utilisées sont pauvres en métaux Fe, Cr, Ni, Zn, Ca, Mg, Al ou leurs homologues,
d) que la phase aqueuse formée lors de la réaction est séparée et la phase organique séparée de polycarbonate est lavée avec un liquide aqueux et
e) que la phase organique de polycarbonate lavée et séparée du liquide de lavage est chauffée, éventuellement après une filtration, et est filtrée à chaud au moins une fois,
b) que le solvant organique est séparé et
c) que le polycarbonate obtenu est traité.

2. Feuille préparée avec un polycarbonate qui possède moins de 250 imperfections par m² mesurées sur une feuille d'extrusion de 200 µm et un trouble de moins de 0,5 %, le polycarbonate étant préparé selon le procédé interfacial, des dihydroxydiarylalcanes étant mis en réaction sous la forme de leurs sels alcalins avec du phosgène dans une phase hétérogène en présence de soude caustique et d'un solvant organique, **caractérisé en ce**
a) que les substances utilisées sont pauvres en métaux Fe, Cr, Ni, Zn, Ca, Mg, Al ou leurs homologues,
d) que la phase aqueuse formée lors de la réaction est séparée et la phase organique séparée de polycarbonate est lavée avec un liquide aqueux et
e) que la phase organique de polycarbonate lavée et séparée du liquide de lavage est chauffée, éventuellement après une filtration, et est filtrée à chaud au moins une fois,
b) que le solvant organique est séparé et
c) que le polycarbonate obtenu est traité.

3. Disques préparés avec un polycarbonate qui possède moins de 250 imperfections par m² mesurées sur une feuille d'extrusion de 200 µm et un trouble de moins de 0,5 %, le polycarbonate étant préparé selon le procédé interfacial, des dihydroxydiarylalcanes étant mis en réaction sous la forme de leurs sels alcalins avec du phosgène dans une phase hétérogène en présence de soude caustique et d'un solvant organique, **caractérisé en ce**
a) que les substances utilisées sont pauvres en métaux Fe, Cr, Ni, Zn, Ca, Mg, Al ou leurs homologues,
d) que la phase aqueuse formée lors de la réaction est séparée et la phase organique séparée de polycarbonate est lavée avec un liquide aqueux et
e) que la phase organique de polycarbonate lavée et séparée du liquide de lavage est chauffée, éventuellement après une filtration, et est filtrée à chaud au moins une fois,
b) que le solvant organique est séparé et
c) que le polycarbonate obtenu est traité.

4. Plaques préparées avec un polycarbonate qui possède moins de 250 imperfections par m² mesurées sur une feuille d'extrusion de 200 µm et un trouble de moins de 0,5 %, le polycarbonate étant préparé selon le procédé interfacial, des dihydroxydiarylalcanes étant mis en réaction sous la forme de leurs sels alcalins avec du phosgène dans une phase hétérogène en présence de soude caustique et d'un solvant organique, **caractérisé en ce**
a) que les substances utilisées sont pauvres en métaux Fe, Cr, Ni, Zn, Ca, Mg, Al ou leurs homologues,
d) que la phase aqueuse formée lors de la réaction est séparée et la phase organique séparée de polycarbonate est lavée avec un liquide aqueux et
e) que la phase organique de polycarbonate lavée et séparée du liquide de lavage est chauffée, éventuellement après une filtration, et est filtrée à chaud au moins une fois,
b) que le solvant organique est séparé et
c) que le polycarbonate obtenu est traité.
